# EUROPEAN PATENT SPECIFICATION

(11) **EP 0 565 265 B1**
(45) Date of publication and mention of the grant of the patent: **13.12.1995**
(21) Application number: 93302169.3
(22) Date of filing: 22.03.1993
(51) Int. Cl.: C09K 5/04

(54) **Refrigerant composition**
Kühlzusammensetzung
Composition réfrigérante

(30) Priority: 04.04.1992 GB 9207607; 18.06.1992 GB 9212958; 30.12.1992 GB 9227073
(43) Date of publication of application: 13.10.1993
(73) Proprietor: Star Refrigeration Ltd., Glasgow G46 8JW, Scotland (GB)
(72) Inventor: Pearson, Stephen Forbes, Glasgow G61 1PZ (GB)
(74) Representative: Horner, Martin Grenville

(56) References cited:
- WO-A-89/03866
- WO-A-92/01762
- PATENT ABSTRACTS OF JAPAN (C-631)31 August 1989
- PATENT ABSTRACTS OF JAPAN vol. 016, no. 176 (C-0934)27 April 1992

## Description

The present invention relates to a refrigerant composition, particularly for use as a replacement in refrigeration equipment currently employing or designed to employ refrigerant R12 or refrigerant R134a.

Refrigerant R12 (CCl₂F₂) is a commonly used refrigerant and is especially used in domestic refrigerators and car air conditioning systems. However, refrigerant R12 contains chlorine atoms and has been implicated in environmental damage. R12 is a chlorofluorocarbon (CFC) gas. These gases, which are very inert, are released from refrigeration systems etc. at ground level and diffuse into the upper atmosphere. Because of their inertness, the gases are able to survive without decomposition until they reach the stratosphere where they are broken down by ultra-violet radiation, releasing chlorine atoms which catalyse breakdown of the stratospheric ozone layer. There has recently been considerable concern about reductions in stratospheric ozone levels and this has led to proposed bans on certain CFC's, including refrigerant R12.

Thus, efforts are being made to replace refrigerant R12 with a more environmentally acceptable alternative. However, in order to be a direct substitution for R12 in existing equipment, any new refrigerant must have generally similar properties in terms of refrigerant performance characteristics.

A new refrigerant R134a (C₂H₂F₄) has been developed as a drop-in replacement for R12 in existing and new equipment. Lacking chlorine atoms, R134a has greater environmental acceptability. However, R134a has several disadvantages.

Firstly, the lubricants normally used in refrigeration apparatus cannot be used with R134a. Special lubricants are required. Some of the special lubricants used are particularly sensitive to the presence of chlorine, which leads to degradation and the formation of a sludge. Since chlorine is necessarily present in refrigeration systems which have been employing R12, it is necessary to flush out the refrigeration system very carefully before the special lubricant can be introduced. Other special lubricants, though not sensitive to chlorine, do not improve the solubility of residual mineral oil in the new refrigerants. In practice, this means that the refrigeration system needs to be flushed out at least three times before the new special lubricant can be introduced.

A second problem, is that whilst R134a gives similar performance to R12 down to about 0°C, R134a has a poorer performance when evaporating below 0°C.

It is an object of the present invention to provide an R12 replacement refrigerant which mitigates these disadvantages.

The present invention provides a refrigerant composition which comprises R134a (tetrafluoroethane), R218 (octafluoropropane), and a hydrocarbon which is propane, propylene or isobutane, the hydrocarbon being present in a non-flammable proportion of upto 10 % by weight.

It is found that the composition of the present invention is compatible with ordinarily used lubricants, so that special lubricants are not required. Moreover, propane has a lower boiling point than R134a, a high critical temperature and high latent heat, which results in a higher performance characteristic for the composition of the present invention. In particular performance is improved below 0°C.

A further aspect of the invention provides a method of refrigeration which employs the composition as a refrigerant medium.

A still further aspect provides a refrigeration apparatus which employs the composition as refrigerant medium.

The composition has essentially no ozone depleting potential since there is no chlorine in any of the components of the composition.

The composition further comprises R218 (octafluoropropane). The R218 has some flammability-reducing and fire-extinguishing properties. Its presence also improves the low temperature performance of the R134a. It is preferably present in an amount of 1 to 50%, usually 3 to 20%, generally 5 to 9%, and typically 5 to 8% by weight of the composition.

The hydrocarbon is present in a non-flammable proportion preferably 2 to 10% by weight, particularly 2 or 3% to 8% by weight, and especially 2 to 5% by weight of the composition. Higher amounts of hydrocarbon can be allowed when larger amounts of R218 are present.

A disadvantage of hydrocarbons such as propane, propylene and isobutane, is their flammability. The composition of the present invention is non-flammable so that in the event of a leak of refrigerant medium into the atmosphere, no explosive or flammable mixture is produced. In particular, a non-flammable composition is one which contains the R134a, R218 and hydrocarbon in such a ratio that when the composition is mixed with air in practical proportions (e.g. in the event of a leak) no flammable mixture results.

It is found advantageous under certain operating conditions to include in the refrigerant composition an extreme pressure anti-wear lubricant additive, which reduces wear on mechanical components such as compressor bearings. This is not usually a problem using conventional R12 refrigerant, since the chlorine present in R12 has a protective effect. Generally the additive will be a liquid which is miscible with the refrigerant composition to produce a homogenous liquid. The additive is usually less volatile than the refrigerant so that it does not significantly enter the vapour phase on evaporation of the refrigerant, but stays as a liquid and mixes with the lubricant. In this way the lubricant additive may be introduced together with the refrigerant composition, without the need to drain and replace the existing lubricant. Usually, the additive will be present in an amount of 0.3 to 5 wt%, preferably 0.5 to 1.0 wt%, of the total weight of the composition.

The additive may be any suitable liquid known in the art, particularly triaryl phosphates such as tricresyl phosphate OP(0C₆H₄CH₃)₃ and trixylyl phosphate OP(0C₆H₃CH₃CH₃)₃.

However, other known liquid sulphur-containing and chlorine-containing extreme pressure lubricant additives may be used.

The refrigerant composition will generally be a non-azeotropic mixture and will therefore act as a mixture rather than as a single gas. Thus, there may be a tendency for one of the components to preferentially evaporate and condense before the other. However, the proportions are generally chosen so that any vented vapour and the remaining charge do not reach flammable proportions. Of course, the refrigerant apparatus should be filled using the refrigerant composition in the liquid phase.

Thus, the refrigerant composition of the present invention represents an improvement over R134a in terms of improved performance. It also allows significant traces of conventional lubricants to be retained in the system after a refrigerant and oil change.

### EXAMPLE 1 (flammability)

Flammability tests were carried out on R134a/R218/propane mixtures using the technique described in Example 2 of patent specification EP0419042 (90309104.9).
The results are as follows:

**TABLE**

| R134a | R218 | propane | Results |
|---|---|---|---|
| 91% | 6% | 3% | non-flammable |
| 90% | 6% | 4% | flammable |
| 89% | 7% | 4% | non-flammable |
| 86% | 9% | 5% | non-flammable |

### EXAMPLE 2 (performance)

The performance of a composition of the present invention as follows

| R134a | R218 | propane |
|---|---|---|
| 86% | 9% | 5% |

was compared with the performance of conventional R12 refrigerant in the same small deep freeze cabinet. Apart from the refrigerant, all other conditions were the same.

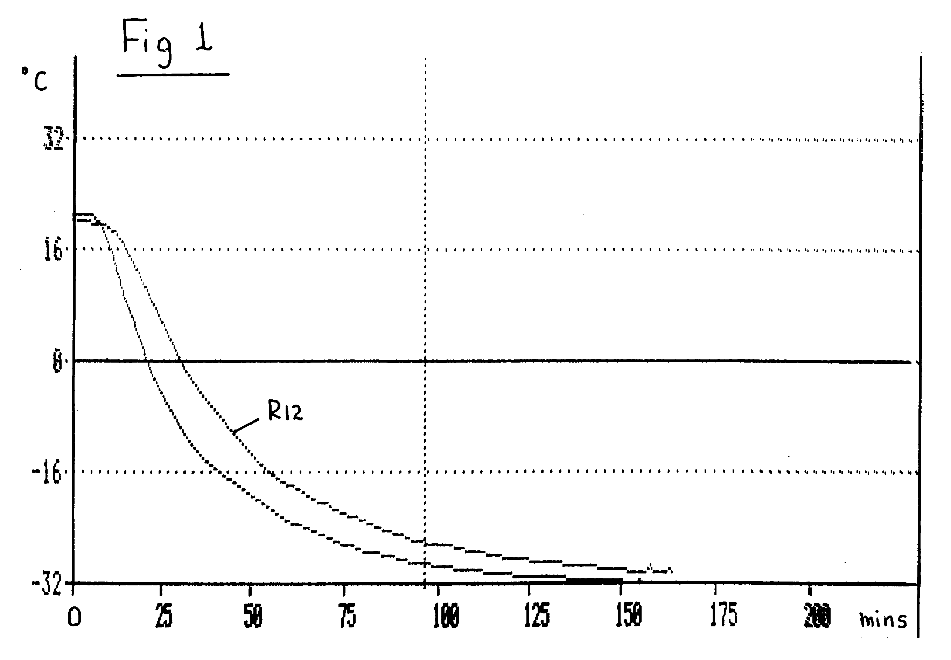

The results are given in Figure 1 which shows that the new composition (left curve) reduces the temperature more quickly and to a lower temperature than is obtained using conventional R12 (right curve).

## Claims

1. A refrigerant composition which comprises R134a (tetrafluoroethane), R218 (octafluoropropane), and a hydrocarbon which is propane, propylene or isobutane; the hydrocarbon being present in a non-flammable proportion of up to 10 % by weight.

2. A composition according to claim 1 wherein the hydrocarbon is propane.

3. A composition according to claim 1 wherein the hydrocarbon is propylene.

4. A composition according to claim 1 wherein the hydrocarbon is isobutane.

5. A composition according to any preceding claim wherein the hydrocarbon is present in a non-flammable proportion in the range 2 to 10% by weight.

6. A composition according to any preceding claim wherein the R218 is present in an amount of 3 to 20% by weight.

7. A composition according to claim 6 wherein the R218 is present in an amount of 5 to 9% by weight.

8. A composition according to claim 1 which comprises by weight;
| | |
|---|---|
| propane | up to 3% |
| R218 | up to 6% |
| R134a | balance. |

9. A composition according to claim 1 which comprises by weight;
| | |
|---|---|
| propane | up to 4% |
| R218 | up to 7% |
| R134a | balance. |

10. A composition according to claim 1 which comprises by weight;
| | |
|---|---|
| propane | up to 5% |
| R218 | up to 9% |
| R134a | balance |

11. A composition according to claim 1 which comprises by weight:
| | |
|---|---|
| propane | substantially 5% |
| R218 | substantially 9% |
| R134a | balance. |

12. A composition according to any preceding claim which further comprises an extreme pressure anti-wear lubricant additive.

13. A composition according to claim 12 wherein the additive is present in an amount of 0.3 to 5 wt % of the composition.

14. A composition according to claim 12 or 13 wherein the additive is a triaryl phosphate.

15. A method of conducting vapour-compression refrigeration which comprises compressing and expanding a refrigerant composition according to any preceding claim.

16. A refrigeration apparatus which employs as refrigerant a composition according to any of claims 1 to 14.

## Patentansprüche

1. Kühlzusammensetzung, die R134a (Tetrafluorethan), R218 (Octafluorpropan) und einen Kohlenwasserstoff umfaßt, der Propan, Propylen oder Isobutan ist; wobei der Kohlenwasserstoff in einem nicht entflammbaren Anteil von bis zu 10 Gew.-% vorhanden ist.

2. Zusammensetzung nach Anspruch 1, worin der Kohlenwasserstoff Propan ist.

3. Zusammensetzung nach Anspruch 1, worin der Kohlenwasserstoff Propylen ist.

4. Zusammensetzung nach Anspruch 1, worin der Kohlenwasserstoff Isobutan ist.

5. Zusammensetzung nach einem der vorhergehenden Ansprüche. worin der Kohlenwasserstoff in einem nicht entflammbaren Anteil im Bereich von 2 bis 10 Gew.-% vorhanden ist.

6. Zusammensetzung nach einem der vorhergehenden Ansprüche, worin das R218 in einer Menge von 3 bis 20 Gew.-% vorhanden ist.

7. Zusammensetzung nach Anspruch 6, worin das R218 in einer Menge von 5 bis 9 Gew.-% vorhanden ist.

8. Zusammensetzung nach Anspruch 1, die folgende Gewichtsprozentsätze aufweist:
| | |
|---|---|
| Propan | bis zu 3 % |
| R218 | bis zu 6 % |
| R134a | Rest. |

9. Zusammensetzung nach Anspruch 1, die folgende Gewichtsprozentsätze aufweist:
| | |
|---|---|
| Propan | bis zu 4 % |
| R218 | bis zu 7 % |
| R134a | Rest. |

10. Zusammensetzung nach Anspruch 1, die folgende Gewichtsprozentsätze aufweist:
| | |
|---|---|
| Propan | bis zu 5 % |
| R218 | bis zu 9 % |
| R134a | Rest. |

11. Zusammensetzung nach Anspruch 1, die folgende Gewichtsprozentsätze aufweist:
| | |
|---|---|
| Propan | im wesentlichen 5 % |
| R218 | im wesentlichen 9 % |
| R134a | Rest. |

12. Zusammensetzung nach einem der vorstehenden Ansprüche, die außerdem einen Extremdruck-Antiverschleiß-Schmiermittel-Zusatz umfaßt.

13. Zusammensetzung nach Anspruch 12, worin der Zusatz in einer Menge von 0,3 bis 5 Gew.-% der Zusammensetzung vorhanden ist.

14. Zusammensetzung nach Anspruch 12 oder 13, worin der Zusatz ein Triarylphosphat ist.

15. Verfahren zur Ausführung einer Kompressionskühlung, welches das Verdichten und Ausdehnen einer Kühlzusammensetzung nach einem der vorstehenden Ansprüche umfaßt.

16. Kühlanlage, die als Kühlmittel mit einer Zusammensetzung nach einem der Ansprüche 1 bis 14 arbeitet.

## Revendications

1. Composition réfrigérante qui comprend du R134a (tétrafluoroéthane), du R218 (octafluoropropane) et un hydrocarbure qui est le propane, le propylène ou l'isobutane, l'hydrocarbure étant présent en une proportion ininflammable allant jusqu'à 10% en poids.

2. Composition selon la revendication 1, dans laquelle l'hydrocarbure est le propane.

3. Composition selon la revendication 1, dans laquelle l'hydrocarbure est le propylène.

4. Composition selon la revendication 1, dans laquelle l'hydrocarbure est l'isobutane.

5. Composition selon l'une quelconque des revendications précédentes, dans laquelle l'hydrocarbure est présent en une proportion ininflammable qui se situe dans la plage de 2 à 10% en poids.

6. Composition selon l'une quelconque des revendications précédentes, dans laquelle le R218 est présent en une quantité allant de 3 à 20% en poids.

7. Composition selon la revendication 6, dans laquelle le R218 est présent en une quantité allant de 5 à 9% en poids.

8. Composition selon la revendication 1, qui comprend, en poids:
jusqu'à 3% de propane
jusqu'à 6% de R218
le solde en R134a.

9. Composition selon la revendication 1, qui comprend, en poids:
jusqu'à 4% de propane
jusqu'à 7% de R218
le solde en R134a.

10. Composition selon la revendication 1, qui comprend, en poids:
jusqu'à 5% de propane
jusqu'à 9% de R218
le solde en R134a.

11. Composition selon la revendication 1, qui comprend, en poids:
effectivement 5% de propane
effectivement 9% de R218
le solde en R134a.

12. Composition selon l'une quelconque des revendications précédentes qui comprend, en outre, un additif lubrifiant-anti-usure pour pression extrême.

13. Composition selon la revendication 12, dans laquelle l'additif est présent en une quantité allant de 0,3 à 5% en poids de la composition.

14. Composition selon la revendication 12 ou 13, dans laquelle l'additif est un triarylphosphate.

15. Procédé pour effectuer une réfrigération du type vapeur-compression qui comprend la compression et la détente d'une composition réfrigérante selon l'une quelconque des revendications précédentes.

16. Appareil de réfrigération qui emploie comme réfrigérant une composition selon l'une quelconque des revendications 1 à 14.
